# EUROPÄISCHE PATENTSCHRIFT

(11) **EP 1 364 983 B1**
(45) Veröffentlichungstag und Bekanntmachung des Hinweises auf die Patenterteilung: **15.08.2007**
(21) Anmeldenummer: 03011074.6
(22) Anmeldetag: 20.05.2003
(51) Int. Cl.: C08J 5/20, C08F 8/28, B01J 41/12, C08F 8/18, C08L 29/04

(54) **Polymere mit Halogenfunktionen und Verfahren zu deren Herstellung**
Halogen-containing polymers and method for producing the same
Polymères halogènes et leur procédé de production

(30) Priorität: 25.05.2002 DE 10223338
(43) Veröffentlichungstag der Anmeldung: 26.11.2003
(73) Patentinhaber: Forschungszentrum Karlsruhe GmbH, 76133 Karlsruhe (DE)
(72) Erfinder: Konrad, Andreas, 66440 Blieskastel (DE); Dinjus, Eckhard, 76774 Leimersheim (DE)
(74) Vertreter: Fitzner, Uwe

(56) Entgegenhaltungen:
- PATENT ABSTRACTS OF JAPAN vol. 007, no. 083 (C-160), 6. April 1983 (1983-04-06) & JP 58 011046 A (MITSUBISHI KASEI KOGYO KK), 21. Januar 1983 (1983-01-21) & CHEMICAL ABSTRACTS, vol. 98, no. 24, 13. Juni 1983 (1983-06-13) Columbus, Ohio, US; abstract no. 199187,

## Beschreibung

Gegenstand der vorliegenden Erfindung sind in polaren aprotischen Lösungsmitteln und/oder Wasser lösliche Polymere mit Halogenfunktion sowie deren Herstellung und deren Verwendung.

Aus dem Stand der Technik sind Polymere mit Halogenfunktion bekannt. Ein Beispiel für ein chlorfunktionalisiertes Polymeres ist chlormethyliertes Polystyrol. Es wird z.B. durch die Umsetzung mit Aminen in Anionenaustauscher überführt.

Die Herstellung von Formkörpern wie Membranen oder Austauscherharzen geht von mit Divinylbenzol vernetztem Polystyrol aus, das dann chlormethyliert und anschließend weiter funktionalisiert wird. Problem dabei ist, daß für die Chlormethylierung der Formkörper im Lösemittel gequollen sein muß und als Reagenz der hochtoxische Chlormethylether eingesetzt werden muß.
Polyvinylchlorid, Polyvinylidenchlorid und Polychloropren als technisch verfügbare chlorfunktionalisierte Polymere sind für die Verarbeitung zu Anionenaustauschern nicht geeignet, da sie sich bei chemischen Umsetzungen zersetzen.
Polyepichlorhydrin und dessen Copolymere sind ebenfalls als Synthesevorstufen für die Herstellung von Anionenaustauschern beschrieben (WO 95/06083). Nachteil dieser Polymere ist, daß sie relativ langsam reagieren, und durch das Grund(co)polymer der Chlorgehalt des resultierenden Polymers fest vorgegeben ist. Entsprechend ist auch das Löslichkeitsverhalten des Grund(co)polymers vorgegeben. Somit ist die Weiterverarbeitung und Funktionalisierung nur in bestimmten Lösemitteln (z.B. Dimethylformamid) möglich.
In JP 5811,046 [8311,046], CA 98:199187t wird die Umsetzung von heterogenen, vernetzten Harzen auf Basis von Polyvinylalkohol mit Chloracetaldehyd oder Derivaten zu Anionenaustauschern beschrieben. Die beschriebenen chlorfunktionellen Umsetzungsprodukte sind aber nicht löslich und somit nur in der vorgegebenen Form weiter verarbeitbar oder funktionalisierbar.
Des weiteren limitierend ist, daß auf diesem Wege nur Polymere geringen Funktionalisierungsgrades erzeugbar sind.

Bei Polymeren, die erst vernetzt werden, also unlöslich sind und danach funktionalisiert werden, stehen viele Gruppen aufgrund sterischer Hinderung nicht für die Umsetzung zur Verfügung.

Bromierte oder iodierte Polymere sind im allgemeinen nicht im technischen Maßstab verfügbare Polymere.
Aus der JP 09176202 ist die Herstellung von Formylalkyl- und Formylbenzyl-Cellulosederivaten und deren Verwendung bei der Behandlung von Nierenkrankheiten bekannt. Zur Herstellung dieser Cellulosederivate wird von Celluloseacetat ausgegangen, das mit Bromacetaldehyddimethylacetal umgesetzt und anschließend hydrolisiert wird. Die Herstellung einer Polymerlösung eines Polymers mit Halogenfunktionen wird nicht beschrieben.
Aus CS 227575 ist eine in Wasser und organischen Lösemitteln unlösliche Formylmethylcellulose bekannt, die durch die Umsetzung von Cellulose mit Bromacetal mit anschließender Hydrolyse hergestellt wird. Die Herstellung einer Polymerlösung eines Polymers mit Halogenfunktionen wird nicht beschrieben.

Aufgabe der vorliegenden Erfindung ist es, halogenfunktionelle Polymere herzustellen, die auch in Form ihrer Lösung in polaren aprotischen Lösungsmitteln und/oder Wasser weiter verarbeitbar sind. Weitere Anforderung an die Polymere sind genügende thermische und chemische Stabilität der Polymere und genügende Reaktivität für die Weiterverarbeitung. Idealerweise sollte auch der Grad der Funktionalisierung in weiten Bereichen variabel sein, um unterschiedliche Materialeigenschaften wie z.B.

Löslichkeiten, Quellungsgrad oder Austauscherkapazität einstellen zu können.

Diese Aufgabe wird dadurch gelöst, daß ein wenigstens eine OH-Funktion enthaltendes Gerüstpolymer mit einem Aldehyd oder einem Syntheseäquivalent eines Aldehyds, welche mindestens eine Halogenfunktion aufweisen, unter Zusatz von Ether umgesetzt wird.

Die erfindungsgemäße Aufgabe wird vorzugsweise durch die Einführung einer Chlorfunktion in ein Gerüstpolymer durchgeführt. Statt der Chlorfunktionalisierung Brom- oder lod-Derivate einzusetzen kann je nach gewünschter Folgechemie, Löslichkeit, Reaktivität nötig sein. Bevorzugt, unter anderem weil sie im allgemeinen billiger und leichter verfügbar sind, sind aber die Chlorverbindungen.

Die erfindungsgemäße Halogen-Funktionalisierung von Polymeren führt zu Polymeren erhöhter chemischer und thermischer Stabilität im Vergleich zum nicht funktionalisierten Grundpolymer. Darüber hinaus erlaubt die Funktionalisierung mit Halogenen aber auch die weitere chemische Modifizierung des Polymers mit polymeranalog eingesetzten organischen Synthesemethoden.
Solcherart erhaltene Polymere stellen Synthesevorstufen für Polymere (in Lösung oder als Formkörper wie z.B. lonenaustauscher, Membranen, Katalysatoren oder andere Trägermaterialien) dar oder dienen als Matrix für die Fixierung von Zwischenprodukten.
Vorteilhaft ist erfindungsgemäß, daß in polaren aprotischen Lösungsmitteln und/oder Wasser lösliche halogenfunktionelle Verbindungen vorliegen, die dann z.B. in Lösung weiter funktionalisiert, vernetzt oder formgebend verarbeitet werden können.

Bevorzugt werden erfindungsgemäß OH-funktionelle Polymere eingesetzt. Beispiele für erfindungsgemäß einsetzbare OH-funktionelle Polymere sind z.B. Polyvinylalkohole (PVA) und Polysaccharide. Weiterhin einsetzbar sind Copolymere, die neben OH-Gruppen weitere funktionelle Gruppen wie z.B. Carbonylfunktionen enthalten, Polymere eines beliebigen Grundgerüsts, bei denen OH-Funktionen durch chemische Reaktionen, Copolymerbausteine, Propfpolymerisation oder Plasmapolymerisation eingeführt wurden.

Erfindungsgemäß besonders bevorzugt sind Polyvinylalkohole, Copolymere des Vinylalkohols, z.B. mit Vinylacetat oder Polysaccharide, insbesondere Cellulose oder Gemische dieser Stoffe.

Beispiele für erfindungsgemäß einsetzbare Aldehyde sind solche, die eine weitere Funktionalität tragen. Besondere Möglichkeiten eröffnen dabei Aldehyde, bei denen sowohl die Aldehydfunktion als auch die weitere Funktionalität endständig sind. Es entstehen erfindungsgemäß dadurch Acetale, die zur weiteren Funktionalität einen Spacer, der durch die Art des verwendeten Aldehyds vorgegeben wird aufweisen können. So lassen sich mit längerkettigen Aldehyden Spacer an die makromolekulare Kette anbauen, die es ermöglichen, auch große oder sperrige Substituenten an die Polymerkette anzubinden, die dann trotzdem noch eine hohe Verfügbarkeit und Beweglichkeit besitzen. Beispiele für solche Substituenten sind unter anderem Metallkomplexe, biologische Wirkstoffe, Enzyme oder Katalysatorkomplexe.

Weitere besondere Ausführungsformen eröffnen auch Substanzen mit mehreren Aldehydfunktionen, wobei alle bis auf eine Aldehydfunktion chemisch geschützt sein können, um Vernetzungen zu vermeiden, später aber durch Entfernen der Schutzgruppe eine Vernetzung ausgelöst werden kann.

Bevorzugt sind Halogenacetaldehyde, z.B. Chloracetaldehyd und Halogenacetaldehyddialkylacetale, z.B. Chloracetaldehyddimethylacetal.

Als Halogene kommen neben Chlor auch Fluor, Brom oder Jod in Betracht. Ebenso sind Mehrfachfunktionalisierungen möglich, wobei hier die genannten Halogene beliebig kombiniert sein können.

Eine bevorzugte Form der Umsetzung ist die in Anwesenheit von Ethern.

Erfindungsgemäß führt die Umsetzung in Ethern zu in polaren aprotischen Lösemitteln, wie z.B. Dimethylformamid (DMF), Dimethylsulfoxid (DMSO) oder N-Methylpyrrolidon (NMP), löslichen halogenfunktionalisierten Produkten, obwohl z.B. Polyvinylalkohole in Ethern nicht löslich sind und auch meist nur wenig darin quellen. Es lassen sich dabei Polymerkonzentrationen von 10 bis 30% und mehr erhalten. Weniger bevorzugte, aber mögliche, Lösemittel für die halogenfunktionalisierten Produkte gemäß der vorliegenden Erfindung sind Ketone, wie z.B. Aceton.
Als Lösemittel für die halogenfunktionalisierten Produkte ist beispielsweise auch Wasser verwendbar.
Die Löslichkeit der erfindungsgemäß funktionalisierten Polymere in den verschiedenen Lösemitteln ist abhängig vom Grad der Funktionalisierung, vorteilhafterweise sogar durch diesen einstellbar.
Es gelingt so die Chlorfunktionalisierung eines Polymers in einer Suspension des Lösemittel /Polymerpulvers bzw. Granulats. Das Reaktionsprodukt ist durch einfache Filtration abtrennbar und anschließend weiterverarbeitbar.
Beispiele einsetzbarer Ether sind die cyclischen Ether Tetrahydrofuran und Dioxan, sowie die bekannten acyclischen Ether, wie z.B. Dialkylether, Glykolether, wie Polyether oder Derivate des Ethylglykols.

Bei der Herstellung der erfindungsgemäßen funktionalisierten Polymere ist zur Reaktion der Alkohole mit den Aldehyden, d.h. der Acetalbildung Säure in katalytischen Mengen notwendig. Diese Säure kann durch die an sich schon sauer reagierenden Halogenaldehyde bereitgestellt werden.
Es ist aber auch möglich, zusätzlich die Säure in Form von Mineralsäuren oder organischen Säuren zuzugeben. Es ist weiterhin möglich, die nötige Säure durch Gegenwart sauer reagierender Salze oder durch die Verwendung von lonenaustauschern in der H⁺-Form zur Verfügung zu stellen.
Es ist aber darauf zu achten, daß der pH-Wert durch die Säurezugabe nicht soweit erniedrigt wird, daß die Acetale durch Rückreaktion wieder zerstört werden. Dies, sowie die Kontrolle desselben, ist dem Fachmann bekannt und bedarf keiner weiteren Erläuterung.

Die nach dem erfindungsgemäßen Verfahren hergestellten Polymere mit niedrigerem Halogengehalt von bis zu ca. 5 Gew.-%, die durch geringe Einsatzmenge von halogenfunktionalisierten Aldehyden zu erhalten sind, sind wasserlöslich.
Der vollständige Ersatz der Halogenfunktion durch Ammonium- oder Amingruppen führt unabhängig vom Funktionalisierungsgrad zu wasserlöslichen Polymeren.

Eine weitere vorteilhafte Eigenschaft der nach dem erfindungsgemäßen Verfahren hergestellten Polymere ist, daß sich relativ hohe Gehalte an funktionellen Gruppen realisieren lassen.

Dies ist vor allem bei Applikationen vorteilhaft, bei denen es auf eine hohe Dichte an funktionellen Gruppen ankommt. Beispiele dafür sind lonenaustauscher, die bei hohen Konzentrationen an Salzen noch Selektivität aufweisen sollen. Ist die interne Konzentration an Austauschergruppen geringer als die Salzkonzentration der Lösung, kommt es zum Selektivitätsverlust. Entscheidend sind solche Effekte z.B. bei der Aufarbeitung von Plasmiden, RNA und DNA, wo die Trennung durch Elution mit Elektrolytlösungen erfolgt. Hier werden umso bessere Trennschärfen erzielt, je höher die Austauscherkapazität des verwendeten Polymers (Anionenaustauschers) ist.

Eine Ausführungsvariante der vorliegenden Erfindung kann auch die Umsetzung der Polymere in Lösung sein. Als Lösemittel für die Edukte eignen sich hierbei neben den schon beschriebenen Ethern auch Lösemittel wie z.B. DMF, DMSO oder Wasser.
Vorteilhafterweise kann man dann die Umsetzungsprodukte evtl. direkt in Lösung erhalten und entsprechend weiterverarbeiten.
In diesen Fällen ist aber ein alkalischer Quench der Reaktionsprodukte z.B. mit Natronlauge, Kalilauge, Aminen oder eine anderweitige Entfernung der für die Acetalbildung eingesetzten Säure notwendig. Damit wird verhindert, daß beim Entfernen des Lösemittels aus dem Polymer, und damit steigender Säurekonzentration (also Erniedrigung des pH-Wertes), eine teilweise Öffnung der Acetale und damit eine ungewünschte Vernetzung, die zu nicht weiterverarbeitbaren Produkten führt, verhindert wird. Dieser Quenchvorgang führt zu einem gewissen Salzgehalt im Polymer oder der Polymerlösung, der z.B. durch Umfällen oder Dialyse entfernbar ist.

Bei Produkten, die in Suspension (Lösemittel/Polymer) hergestellt wurden, erhält man salz- und säurefreie Produkte vorteilhafterweise einfach durch Spülen mit dem gleichen Lösemittel, welches auch die Suspension mit dem Polymeren bildete.
Die beschriebenen Polymere lassen sich vielfältig einsetzen. Ein Beispiel ist die Herstellung von Formkörpern der unterschiedlichsten Art. Hierzu zählen z.B. die Herstellung von Folien, Membranen, Trägermaterialien, Harzen, Schüttgut, Beschichtungen. Ebenso lassen sich Formkörper für die Stofftrennung, Brennstoffzellen, lonenaustauscher und Katalyse herstellen. Außerdem eignen sich die erfindungsgemäßen Polymere z. B. für Formkörper, die in der Festphasenpeptidsynthese, in kombinatorischen Synthesen und in verschiedenen anderen Bereichen der Biotechnologie einsetzbar sind.

Einige Verwendungsmöglichkeiten der erfindungsgemäßen Polymere werden im folgenden näher beschrieben.

Für Lösungen der erfindungsgemäßen Polymere ergeben sich vielfältige Einsatzmöglichkeiten in Membrangießlösungen für Anionenaustauschermembranen, oder Membranen die gleichzeitig anionen- und kationenaustauschende Gruppen enthalten.
Mit Aminaldehyden ist die Umsetzung von poly-OH-funktionellen Polymeren zu Anionenaustauschern auch einstufig durchführbar. Für die reproduzierbare Herstellung vernetzter Membranen muß aber von dem chlormethylierten Derivat ausgegangen werden und dieses durch die Umsetzung mit Di-, Tri-,Polyaminen gleichzeitig aminfunktionalisiert, vernetzt und der filmbildende Prozeß für die Membranherstellung durchgeführt werden. Möglich ist eine solche einstufige Synthese aber für die chemische Modifizierung einer Membran mit einer mit Dialdehyden vernetzten Trennschicht aus poly-OH-funktionellen Polymeren.
Daß im zum Acetal umgesetzten Polymer noch freie OH-Gruppen verbleiben können, bedeutet, daß erfindungsgemäße Polymere vorteilhafterweise noch anderweitig weiter funktionalisierbar sind, und durch die verbleibenden OH-Gruppen auch eine bessere Löslichkeit der erfindungsgemäßen Polymere in Wasser o.ä. Lösemitteln gegeben ist.
Die durch die OH-Gruppen entstehende Hydrophilie der Polymere ist des weiteren bei Membranen von Vorteil, bei denen der Wassergehalt in der Membran entscheidend für Permeabilität und Selektivität ist, wie zum Beispiel aminfunktionalisierte Membranen für den aktiven Transport (facilitated transport) von CO₂ zur Abtrennung aus feuchten Gasen.
Besonderer Vorteil der erfindungsgemäßen Polymere ist dabei, daß die Acetalfunktion gegen starke Basen, metallorganische Verbindungen und Reduktionsmittel weitgehend inert ist.
Polysaccharide sind weitere OH-funktionelle Polymere, die für die Lösung der erfindungsgemäßen Aufgabe in Frage kommen. Das Polysaccharid Cellulose ist nur unter Strukturveränderung in speziellen Lösungssystemen (wie z.B. Schweizers Reagenz, Dimethylsulfoxid-Paraformaldehyd-Mischungen) löslich.
Setzt man Cellulosepulver jedoch mit Chloracetaldehyd um, so wird das Reaktionsprodukt in N-Methylpyrrolidon (NMP) löslich.

Aminierung der erfindungsgemäßen Polymere führt mit zunehmender lonenaustauscherkapazität (IEC) erst zu in Wasser quellbaren, dann zu wasserlöslichen Polymeren.
Es ist ebenfalls möglich, funktionalisierte oder teilfunktionalisierte Cellulose nach der erfindungsgemäßen Methode umzusetzen.
Mit der erfindungsgemäßen Methode läßt sich auch ein Celluloseregenerat herstellen, indem erst durch Acetalisierung ein lösliches Derivat hergestellt wird und dann, z.B. mit konzentrierten Säuren, die Acetalfunktion am Polymer entfernt wird wonach Cellulose ausfällt. Mit diesem Verfahren läßt sich Cellulose reinigen oder es lassen sich auch, je nach Wahl des Lösemittelsystems, poröse oder nichtporöse Formkörper aus Cellulose herstellen. Möglich ist es z.B. asymmetrische Flach- oder Hohlfasermembranen herzustellen, die je nach Führung des Prozesses auch noch teilweise funktionalisiert sein können.
Erfindungsgemäße Polymere lassen sich auch vorteilhafterweise bei der Peptidsynthese einsetzen. Dafür übliche Methoden und Polymere sind durch R.B. Merrifield, Solid Phase Peptide Synthesis, JACS 85 (1963) 2149 // E. Bayer, Angew. Chem. 103(1991) 117-133 // J.M.J. Fréchet, Synthesis and applications of organic polymers as supports and protecting groups, Tetrahedron Vol. 37, pp. 663 to 683 beschrieben.
Dort ist auch detailliert beschrieben, warum z.B. chlormethyliertes Polystyrol (Merrifield Polymer) nicht die erste Wahl für diese Synthesen ist. Polystyrol ist eine relativ hydrophobe Matrix und daher für die hydrophilen Peptide nicht die erste Wahl.
Die erfindungsgemäßen Polymere enthalten neben Halogenalkylgruppen, wobei die Alkylgruppe aus dem verwendeten halogenfunktionellen Aldehyd resultiert, auch OH-Gruppen, welche das Polymer hydrophiler machen.
Sie sind in Lösung für Flüssigphasensynthesen einsetzbar. Von besonderem Vorteil ist hier die Einstellbarkeit der Löslichkeitseigenschaften über den Funktionalisierungsgrad. Sterische Faktoren wie bei vernetzten Polymeren und mangelnde kinetische Äquivalenz der einzelnen reaktiven Gruppen werden dabei umgangen.
Ferner sind die erfindungsgemäßen Polymere als Harze einsetzbar. Besonderer Vorteil der erfindungsgemäßen Polymere ist dabei, daß durch den Grad und die Art der Funktionalisierung die Quellung der Harze und deren Druckstabilität leicht optimiert und der Applikation angepaßt werden kann.
Die erfindungsgemäßen Polymere sind auch zur Herstellung von Substraten bei modernen automatisierten Methoden der kombinatorischen Chemie zur parallelen Durchführung mehrere Synthesen im Mikromaßstab einsetzbar.

Voraussetzung für ein Funktionieren von Peptidsynthesen mit den erfindungsgemäßen Polymeren ist dabei, daß die Reaktionsführung so zu wählen ist, daß bei der cyclischen (sauren) Abspaltung der Schutzgruppen die Acetalfunktion der erfindungsgemäßen funktionalisierten Polymere nicht angegriffen wird. Ebenfalls ist die Reaktivität der im Polymer noch befindlichen OH-Funktionen zu berücksichtigen.
Bezüglich sauer abspaltbarer Schutzgruppen wird z.B. auf E. Bayer, Angew. Chem. 103 (1991) 117-133 verwiesen. Beispielhaft sei hier die *tert*.-Butyloxycarbonyl-Gruppe (BOC) genannt.
Vorteilhafterweise läßt sich aber die Acetalfunktion der erfindungsgemäßen Polymere bei der endgültigen Abspaltung des Peptids bei Synthesende auch stark sauer spalten (üblich ist z.B. HF conc.). Damit kommt es nicht zu Produktverlusten durch zu starke Anhaftung der Produkte am Substrat. Die Polymere sind nach der Abspaltung des Produkts OH-funktionell, können aber, z.B. mit Halogenacetaldehyd in Tetrahydrofuran in Anwesenheit katalytischer Mengen Säure, wieder regeneriert werden.
Bei der Flüssigphasensynthese lassen sich veränderte Löslichkeitseigenschaften des Polymers nach der Synthese, die wie oben erwähnt über den Funktionalisierungsgrad einstellbar sind, auch zu leichterer Produktabtrennung nutzen.

Bei einem an einem durch hohen Halogengehalt nicht wasserlöslichen erfindungsgemäßen Polymer synthetisierten wasserlöslichen Peptid kann die Aufarbeitung z.B. einfach durch Zugabe von Wasser erfolgen (wobei das Polymer ausfällt).
Gegenüber dem Stand der Technik, bei dem die Trennung von Polymer und Peptid in der Regel durch Ultrafiltration erfolgen muß, genügen zur Trennung von erfindungsgemäßem Polymer und Peptid oft schon einfache Methoden wie Umfällen, Extraktion oder ähnliches, wobei die Ultrafiltration erfindungsgemäß natürlich ebenfalls möglich, aber in der Regel nicht notwendig, ist.
Da die erfindungsgemäßen Polymerlösungen bzw. aus diesen Lösungen hergestellte polymere Formkörper aufgrund ihrer OH-Funktionalität (Löslichkeits- und Affinitätsverhalten) gut in wäßrigen Lösungen eingesetzt werden können, ergeben sich auch vielfältige Möglichkeiten für ihren Einsatz als Trägermaterialien oder Trennschichten in der Biotechnologie, wo als Lösemittel überwiegend Wasser zum Einsatz kommt.
Weiterhin vorteilhaft bei den erfindungsgemäßen Polymeren ist deren hohe Tendenz zur Haftung auf Glas, Kieselgel, Stahl und Katalysatorträgern.
Es ergeben sich somit vielfältige Möglichkeiten für die Beschichtung und Anbindung von Substanzen mit hohen Standzeiten und geringem Leaching.
Besonders vorteilhaft ist die Anhaftung an Substanzen, die mit OH-Gruppen Wasserstoffbrückenbindungen ausbilden können. Da die erfindungsgemäßen Polymere aus polymerstatistischen Gründen immer auch noch nicht zu Acetalen umgesetzte OH-Gruppen enthalten, reichen schon geringe Molmassen aus, um durch eine Vielzahl von Wasserstoffbrückenbindungen Anhaftungen zu erzielen, die mit kovalenten Bindungen vergleichbare Stärken erreichen können.
Vorteilhafter ist, daß selbst bei einem Bindungsbruch einer Wasserstoffbrückenbindung dieser reversibel ist; es ist sehr unwahrscheinlich, das alle Bindungen gleichzeitig gelöst werden. Somit sind sehr stabile Trägersysteme mit geringem Leaching (Auslaugen) realisierbar.

Z.B. lassen sich Kieselgele mit wasserlöslichen Anionenaustauschern beschichten, die dann aber mit wäßrigen Systemen nicht mehr eluierbar sind.
Solche beschichteten Kieselgele lassen sich z.B. in der Biotechnologie für die Trennung von RNA/DNA einsetzen.
Je nach Applikationsmethode lassen sich die Polymere einschichtig auf die Träger, mehrschichtig oder aber in Form abstehender Tentakel aufbringen.

Im folgenden wird die Erfindung unter Bezugnahme auf die Beispiele näher erläutert:

### Vergleichsbeispiel 1

In einen 1 l Dreihalskolben mit KPG-Rührer und Rückflußkühler werden zu 500 ml Wasser 25,0 g pulverförmiger Polyvinylalkohol (0,347 mol d.h. 0,568 mol OH-Gruppen) 22000 , Polymerisationsgrad 500, Hydrolysierungsgrad 97.5-99.5 mol% (Fluka 81382) gegeben, 1 h auf Rückfluß gekocht und ohne weiteres Heizen über Nacht stehen lassen. Die Mischung wird auf 40°C erwärmt und 8 ml HCI (c = 1 mol/l, 0,008 mol) zugegeben. Danach wird über einen Tropftrichter 50 ml Chloracetaldehyd (45% in Wasser, Fluka 22760, 0,286 mol = 83% bzgl. PVA) zugegeben. Die Farbe ändert sich nach hellgelb. Die Mischung wird 24 h bei 40°C gerührt.
Die Reaktionsmischung wird am Rotationsverdampfer eingeengt. Es bildet sich ein honiggelber fester, nicht löslicher Polymerfilm.

### Vergleichsbeispiel 2

Es wird analog zu Vergleichsbeispiel 1 verfahren, statt Wasser wird aber Dimethylformamid (DMF) als Lösemittel verwendet. Nach teilweisem Entfernen des Lösemittels erhält man ein dunkelbraun bis schwarzes gummiartiges Polymer, das nach vollständigem Trocknen eine feste Konsistenz erhält.

### Beispiel 1

Es wird analog Vergleichsbeispiel 1 verfahren, statt Wasser wird aber Tetrahydrofuran (THF) als Lösemittel verwendet. Die Farbe der Suspension ändert sich nach Zugabe des Chloracetaldehyds nach hellgrün. Die Mischung wird 24 h bei 40°C gerührt. Man erhält einen gelbgrünen Feststoff und eine hellgrüne Lösung. Der Feststoff wird über eine G3 Filternutsche abfiltriert, mit THF gewaschen und am Ölpumpenvakuum getrocknet.
Man erhält 27,04 g (Ausbeute: 99,4% bzgl. Polyvinylalkohol (PVA) blaßgrünen Feststoff (im weiteren PVACl1 genannt, 80,1 mg Cl g⁻¹), IR (C-Cl: 756,57 cm⁻¹, C-O-C 1143,83 cm⁻¹, 1028,55 cm⁻¹), Elementaranalyse (C: 49,752%, H: 7,6595%, N: 0,000%) .

### Beispiel 2

Die Synthese wird analog Beispiel 1 durchgeführt, nur wurde statt THF als Lösemittel Dioxan verwendet.

### Beispiel 3

Die Synthese wird analog Beispiel 1 durchgeführt, nur wird statt Chloracetaldehyd die äquimolare Menge Chloracetaldehyddimethylacetal und anstelle von Dioxan wird als Lösemittel Tetraethylenglykoldimethylether eingesetzt. Im Reaktionsverlauf wird Methanol destillativ entfernt.

### Beispiel 4

In der folgenden Tabelle sind Löslichkeitsversuche mit Wasser, Dimethylformamid (DMF), Dimethylsulfoxid (DMSO) und N-Methylpyrrolidon (NMP) bzw. das Löslichkeitsverhalten von PVA-Chloracetaldehyd-Umsetzungsprodukten mit den genannten Lösemitteln dargestellt:

| | Umsetzung in: | Produkt löslich in: | | | |
|---|---|---|---|---|---|
| | | H₂O | DMF | DMSO | NMP |
| Vergleichsbeispiel 1 | H₂0 | Gel | Gel | Gel | Gel |
| Vergleichsbeispiel 2 | DMF | - | Gel | Gel | Gel |
| Beispiele 1 bis 3 | THF | nein | wenig | sehr gut | Gut |

Je nachdem in welchem Lösemittel die Umsetzung stattgefunden hat, ergeben sich Produkte, die unlöslich sind und in allen Lösemitteln nur zu Gelen aufquellen oder lösliche Produkte.

### Beispiel 5

Entscheidend für die Weiterverarbeitbarkeit der hergestellten Polymere ist auch deren thermisches Verhalten. Sie dürfen sich, um zu Formkörpern aus Lösung verarbeitbar zu sein, z.B. bei Abdampfen des Lösemittels nicht zersetzen. Daher wurden erfindungsgemäß hergestellte Polymere mit DTA/TGA (Differentialthermoanalyse/Thermogravimetrische Analyse) auf ihr thermisches Verhalten hin untersucht, um das Zersetzungsverhalten mit anderen Polymeren vergleichen zu können.
Die TGA (1K/min, trockene Luft) von PVACl1 zeigt, daß dieses Polymer bis 150°C beständig ist (vgl. Fig.1, TGA/DTA von PVACI1 (Beispiel 1), Probemasse 99 mg, 1 K/min, trockene Luft.). Bis 100°C ergibt sich ein Masseabnahme von 5,4%, dTG bleibt bis 150°C konstant bei einer Masseabnahme von insgesamt 7,44% (Wasser, endotherm DTA). Die Polymermatrix bindet aufgrund ihres Gehaltes an OH-Gruppen gut Wasser. Die Masse der Probe bei 150°C wird für die weitere Betrachtung dann als Trockengewicht angenommen.
PVACl1 ist somit für die Formkörperherstellung im Temperaturbereich <150°C stabil, die Acetalfunktion ist unter diesen Bedingungen (Anwesenheit von Luftsauerstoff, Aufheizung 1 K/min) bis ca. 185°C stabil.

### Beispiel 6

Das Vorgehen bei der Membranherstellung soll anhand des folgenden Beispiels gezeigt werden:0,7414 g PVACl1 (2,08 mmol Cl) werden in 24,5456 g NMP 24 h quellen lassen und dann bei Raumtemperatur unter Rühren gelöst (2,9%ige Lösung). Man erhält eine grüne, viskose Lösung die bei der Zugabe von 139,6 mg Ethylendiamin (2,32 mmol) sofort gelb wird. Zu der Lösung werden 0,389 g Polyethersulfon PESU Radel A100 20% in DMF gegeben (10% Inertpolymer). Die viskose Lösung wird über säuregewaschene Cellulosefilter Weißbrand S&S druckfiltriert (5 bar).

Durch Entfernen des Lösemittels bei 110°C, 5h erhält man braune, auf Glas und Polymeren fest haftende Filme.

### Beispiel 7

Eine Lösung von PVACl1 in NMP wird auf eine Glasplatte gerakelt und in destilliertes Wasser eingebracht. Es entsteht ein poröser Film asymmetrischer Struktur (d.h. der Film unterscheidet sich in seiner Struktur an Ober- und Unterseite).

### Beispiel 8

202 g Polyvinylalkohol und 512 g Dioxan werden 6 Stunden bei 80°C gerührt, anschließend über Nacht stehen lassen. Das Gemisch wird auf 40°C temperiert und danach 6,4 ml 37% Salzsäure zugegeben. Dann wird 400 ml Chloracetaldehyd über Tropftrichter langsam zugegeben. Der Ansatz wird noch ca. 8 Stunden bei 40°C, dann über Nacht bei 25°C gerührt. Die Farbe des Reaktionsgemisches ändert sich nach gelb-grün. Das Reaktionsgemisch wird in 6.2 I destilliertem Wasser nach Zugabe von 4,358 g Kalilauge gefällt. Das Produkt wird dreimal mit Wasser gespült und über Nacht in Wasser stehen gelassen. Dann wird bei 80°C vor-, später weiter bei Raumtemperatur getrocknet und das gummiartige Polymer zerkleinert. Man erhält 310 g eines Polymers mit 13% Chlor-Gehalt bzgl. Trockenmasse, welches beim weiteren Trocknen über Kieselgel von einer gummiartigen Konsistenz in eine glasartige Konsistenz übergeht.

### Beispiel 9

Es wird analog zu Beispiel 1 verfahren, die Reaktion nur statt mit Polymerpulver mit Polymergranulat der Korngröße 2 mm durchgeführt. Man erhält ein Polymer mit einem Chlorgehalt von 4,2% bzgl. Trockenmasse.

### Beispiel 10 und 11

Cellulosepulver wird mit Chloracetaldehyd umgesetzt. Das Polymer enthält 2-Chlormethyl-1,3-Dioxolan-Einheiten. Pro Cellubiose-Einheit ist maximal die Umsetzung mit 2 mol Chloracetaldehyd möglich. In diesem Fall liegt ein chlormethyliertes Polymer mit einem Elementverhältnis von C₈O₅H₁₁Cl mit einer Formelmasse von 222,5 g/mol und einem Chlorgehalt von 16% bezüglich Masse vor. Ionenaustauscher auf Basis dieses Polymers haben somit eine maximale IEC von etwa 4,5 meq/g. Bei 8 h Reaktionsdauer und einer Reaktionstemperatur von 40°C erhält man bei Umsetzung in Dioxan ein Polymer mit einem Chlorgehalt von 2,0% bzgl. Trockenmasse, bei Umsetzung in THF ein Polymer mit 1,0% Chlor bzgl. Trockenmasse.

## Patentansprüche

1. Verfahren zur Herstellung von in polaren aprotischen Lösungsmitteln und/oder Wasser löslichen halogenfunktionellen Polymeren, **dadurch gekennzeichnet, daß** ein wenigstens eine OH-Funktion enthaltendes Gerüstpolymer mit einem Aldehyd oder Syntheseäquivalent eines Aldehyds, welche mindestens eine Halogenfunktion aufweisen, unter Zusatz von Ether umgesetzt wird.

2. Verfahren nach Anspruch 1, **dadurch gekennzeichnet, daß** das Gerüstpolymer unter Zusatz von Ether eingesetzt wird.

3. Verfahren nach einem der Ansprüche 1 oder 2, **dadurch gekennzeichnet, daß** als Gerüstpolymer um Polyvinylalkohol oder Derivate des Polyvinylalkohol Copolymere des Vinylalkohols oder Polysaccharide eingesetzt werden.

4. Verfahren nach einem der Ansprüche 1 bis 3 **dadurch gekennzeichnet, daß** Copolymere mit Vinylacetat oder Cellulose eingesetzt werden.

5. Verfahren nach einem der Ansprüche 1 bis 4 **dadurch gekennzeichnet, daß** als Ether, Tetrahydrofuran, Dioxan oder Gemische dieser Stoffe eingesetzt werden.

6. Verfahren nach einem der Ansprüche 1 bis 5 **dadurch gekennzeichnet, daß** die Aldehyde oder Syntheseäquivalente mit Chlor, Fluor, Brom oder Jod funktionalisiert sind.

7. Verfahren nach einem der Ansprüche 1 bis 6, **dadurch gekennzeichnet, daß** als Aldehyd Chloracetaldehyd oder eine Lösung davon oder Chloracetaldehyddimethylacetal eingesetzt wird.

8. Verfahren nach Anspruch 1, **dadurch gekennzeichnet, daß** das Aldehyd in Form eines Acetals eingesetzt wird.

9. Verfahren nach einem der Ansprüche 1 bis 8, **dadurch gekennzeichnet, daß** ein Halogenaldehyd bereits vor der Umsetzung mit dem Gerüstpolymer an der Halogenfunktion, auch unter Ersatz der Halogenfunktion durch eine andere Funktion, weiter funktionalisiert wird.

10. In polaren aprotischen Lösungsmitteln und/oder Wasser lösliches halogenfunktionelles Polymer hergestellt in einem Verfahren nach einem der Ansprüche 1 bis 9.

11. Polymer nach Anspruch 10 **dadurch gekennzeichnet, daß** es in Wasser oder polaren aprotischen organischen Lösemitteln löslich ist.

12. Verwendung des Polymers nach einem der Ansprüche 1 bis 9 zur Herstellung von Formkörpern.

13. Verwendung des Polymers nach Anspruch 12 zur Herstellung von Folien, Membranen, Trägermaterialien, Harzen, Schüttgut, Beschichtungen sowie von Formkörpern für die Festphasenpeptidsynthese oder für kombinatorische Synthesen.

## Claims

1. Process for producing halogen-functional polymers soluble in polar aprotic solvents and/or water, **characterized in that** a scaffolding polymer containing at least an OH function is reacted with an aldehyde or synthesis equivalent of an aldehyde, which have at least one halogen function, in the presence of ether.

2. Process according to Claim 1, **characterized in that** the scaffolding polymer is used in the presence of ether.

3. Process according to either of Claims 1 or 2, **characterized in that** the scaffolding polymer used comprises polyvinyl alcohol or derivatives of polyvinyl alcohol copolymers of vinyl alcohol or polysaccharides.

4. Process according to any one of Claims 1 to 3 **characterized in that** copolymers with vinyl acetate or cellulose are used.

5. Process according to any one of Claims 1 to 4 **characterized in that** tetrahydrofuran, dioxane or mixtures thereof are used as ether.

6. Process according to any one of Claims 1 to 5 **characterized in that** the aldehydes or synthesis equivalents are chlorine, fluorine, bromine or iodine functionalized.

7. Process according to any one of Claims 1 to 6, **characterized in that** the aldehyde used is chloroacetaldehyde or a solution thereof or chloroacetaldehyde dimethyl acetal.

8. Process according to Claim 1, **characterized in that** the aldehyde is used in the form of an acetal.

9. Process according to any one of Claims 1 to 8, **characterized in that** the haloaldehyde is further functionalized at the halogen function, including the halogen function being replaced by some other function, before the reaction with the scaffolding polymer.

10. Halogen-functional polymer soluble in polar aprotic solvents and/or water and obtained in a process according to any one of Claims 1 to 9.

11. Polymer according to Claim 10 **characterized in that** it is soluble in water or polar aprotic organic solvents.

12. Use of the polymer according to any one of Claims 1 to 9 for producing shaped articles.

13. Use of the polymer according to Claim 12 for producing films, membranes, carrier materials, resins, bulk goods, coatings as well as shaped articles for solid phase peptide synthesis or for combinatorial syntheses.

## Revendications

1. Procédé de préparation de polymères à fonction halogène solubles dans des solvants aprotiques polaires et/ou de l'eau, **caractérisé en ce qu'**on fait réagir un polymère de squelette contenant au moins une fonction OH avec un aldéhyde ou un équivalent de synthèse d'un aldéhyde, qui présente au moins une fonction halogène, avec addition d'éther.

2. Procédé suivant la revendication 1, **caractérisé en ce que** le polymère de squelette est mis en oeuvre avec addition d'éther.

3. Procédé suivant l'une des revendications 1 et 2, **caractérisé en ce que**, comme polymère de squelette, on met en oeuvre de l'alcool polyvinylique ou des dérivés de l'alcool polyvinylique, des copolymères de l'alcool vinylique ou des polysaccharides.

4. Procédé suivant l'une des revendications 1 à 3, **caractérisé en ce qu'**on met en oeuvre des copolymères avec de l'acétate de vinyle ou de la cellulose.

5. Procédé suivant l'une des revendications 1 à 4, **caractérisé en ce que**, comme éther, on met en oeuvre du tétrahydrofuranne, du dioxanne ou des mélanges de ces substances.

6. Procédé suivant l'une des revendications 1 à 5, **caractérisé en ce que** les aldéhydes ou équivalents de synthèse sont fonctionnalisés par du chlore, du fluor, du brome ou de l'iode.

7. Procédé suivant l'une des revendications 1 à 6, **caractérisé en ce que**, comme aldéhyde, on met en oeuvre du chloroacétaldéhyde ou une solution de celui-ci ou du chloroacétaldéhydediméthylacétal.

8. Procédé suivant la revendication 1, **caractérisé en ce que** l'aldéhyde est mis en oeuvre sous la forme d'un acétal.

9. Procédé suivant l'une des revendications 1 à 8, **caractérisé en ce que**, déjà avant la réaction avec le polymère de squelette, un halogénoaldéhyde est davantage fonctionnalisé sur la fonction halogène, également par remplacement de la fonction halogène par une autre fonction.

10. Polymère à fonction halogène soluble dans des solvants polaires aprotiques et/ou de l'eau, préparé dans un procédé suivant l'une des revendications 1 à 9.

11. Polymère suivant la revendication 10, **caractérisé en ce qu'**il est soluble dans l'eau ou dans des solvants organiques polaires aprotiques.

12. Utilisation du polymère suivant l'une des revendications 1 à 9, pour la fabrication de corps façonnés.

13. Utilisation du polymère suivant la revendication 12, pour la fabrication de feuilles, de membranes, de matières de support, de résines, de matières en vrac, de revêtements ainsi que de corps façonnés pour la synthèse peptidique à phase solide ou pour des synthèses combinatoires.
